# EUROPEAN PATENT SPECIFICATION

(11) **EP 0 350 225 B1**
(45) Date of publication and mention of the grant of the patent: **26.01.1994**
(21) Application number: 89306700.9
(22) Date of filing: 30.06.1989
(51) Int. Cl.: G11B 7/08, G11B 7/085

(54) **Optical head apparatus**
Anordnung für einen optischen Kopf
Dispositif de tête optique

(30) Priority: 07.07.1988 JP 169400/88
(43) Date of publication of application: 10.01.1990
(73) Proprietor: Oki Electric Industry Company, Limited, Tokyo 105 (JP)
(72) Inventor: Tanoshima, Katsuhide Oki Electric Industry Co. Ltd, Minato-ku Tokyo (JP); Ohtsuka, Minoru Oki Electric Industry Co. Ltd, Minato-ku Tokyo (JP); Nagata, Shizuo Oki Electric Industry Co. Ltd, Minato-ku Tokyo (JP); Takahashi, Masahiro Oki Electric Industry Co. Ltd, Minato-ku Tokyo (JP); Shimizu, Yasuo Oki Electric Industry Co. Ltd, Minato-ku Tokyo (JP)
(74) Representative: Read, Matthew Charles

(56) References cited:
- EP-A- 0 212 697
- EP-A- 0 228 055
- GB-A- 2 167 208
- US-A- 4 838 649

## Description

The present invention relates to an optical head apparatus suitable for use in an optical disc unit.

In an optical data recording/reproducing apparatus, in which a predetermined recording medium (usually disc) is irradiated with a light beam to record or reproduce data, it is necessary to focus the light on the disc, for a light spot to trace a track on the disc and to move the light spot toward the inner and outer circumferences. Therefore, the optical head apparatus is arranged so that it can achieve such focus control, tracking control and (radial) carriage control.

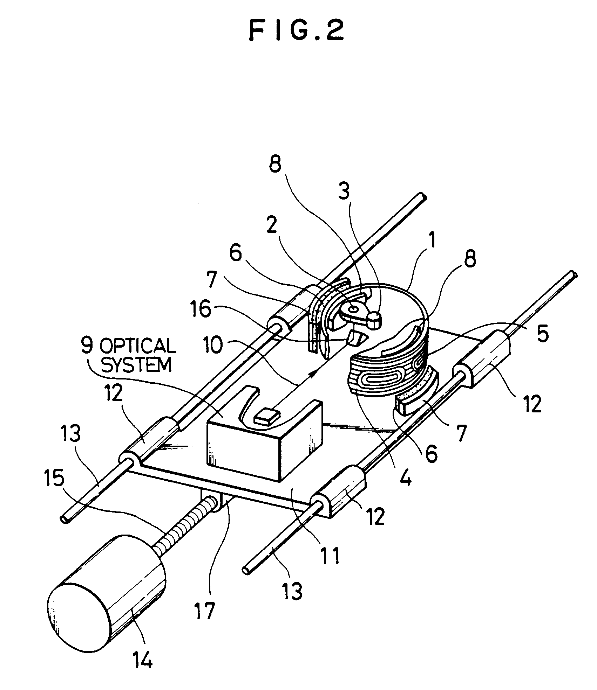

Fig. 2 illustrates the construction of a conventional optical head apparatus, which is applied to the compact disc player or optical video disc player or the like. In the figure, reference numeral 1 denotes a substantially cylindrical armature, on which upper surface (omitted in the figure for the sake of convenience) an objective lens 2 is mounted. Reference numeral 3 denotes a post fixed upright on a carriage 11, which supports the armature 1 so that the latter may vertically move (slide) and rotate. Reference numeral 4 denotes a focusing coil wound about the outer peripheral wall of the armature 1, and reference numeral 5 denotes a tracking coil stuck onto the coil 4. Reference numerals 7 denote yokes fixed to the carriage 11 and permanent magnets 6 are attached thereto. Reference numeral 8 denotes a yoke fixed to the carriage 11. The yoke 8 and magnet 6 are respectively disposed inside and outside of the armature in such a way that they may oppose each other with the coils 4 and 5 interposed therebetween. Reference numeral 9 denotes an optical system which emits laser beam 10 and is loaded on the carriage 11. Reference numeral 12 denotes a slide portion formed at the end portion of the carriage 11 and a shaft 13 is inserted therethrough. Reference numeral 14 denotes an access (carriage) motor, which rotates a screw 15. The screw 15 engages a receiver portion 17 fixed to the carriage 11. A mirror 16 is fixed to the carriage 11.

The laser beam 10 emitted from a light source (not shown) such as a semiconductor laser or the like, which is incorporated into the optical system 9, is reflected by the mirror 16 to be directed into the objective lens 2, which in turn converges the incident light for irradiation onto a disc (not shown). The light reflected by the disc returns along the same path to be directed to the optical system 9. The optical system 9 incorporates photodiodes (not shown) to detect the light reflected from the disc.

A focus error signal is generated from the outputs of the photodiodes and is supplied to the coil 4. Since the coil 4 is disposed within the magnetic field of the magnets 6, when the current corresponding to the focus error signal flows, electromagnetic force will be generated. As a result, guided by the post 3, the armature 1 (hence the objective lens 2) moves in the vertical direction (i.e., focusing direction). In this way, the focusing control is achieved.

Meanwhile, the tracking error signal generated from the outputs of the photodiodes is supplied to the coil 5. Since the coils 5 are also disposed within the magnetic field of the magnets 6, when the current flows, an electromagnetic force is generated. This electromagnetic force causes the armature 1 to be rotated in the clockwise or counterclockwise direction, with the post 3 as a fulcrum. As a result, the tracking control is achieved.

Furthermore, when the data recording/reproducing position is moved in the direction of its inner or outer circumference, a carriage (radial) error signal is input to the access motor 14. At this time, the screw 15 is rotated by the motor 14. Since the receiver portion 17 engages the screw 15, guided by the shaft 13, the carriage 11 is moved radially of the disc with the result that carriage (radial) control is achieved.

As seen above, the optical head unit of Fig. 2, in which not only the optical system 9 but also the magnetic circuit and the like are loaded on the carriage 11, weighs as much as 50 g, and the average access speed with respect to a predetermined track lies on the order of 300 ms, which is slow. EP-A-0 228 055 discloses an optical head having the features of the precharacterising portion of claim 1.

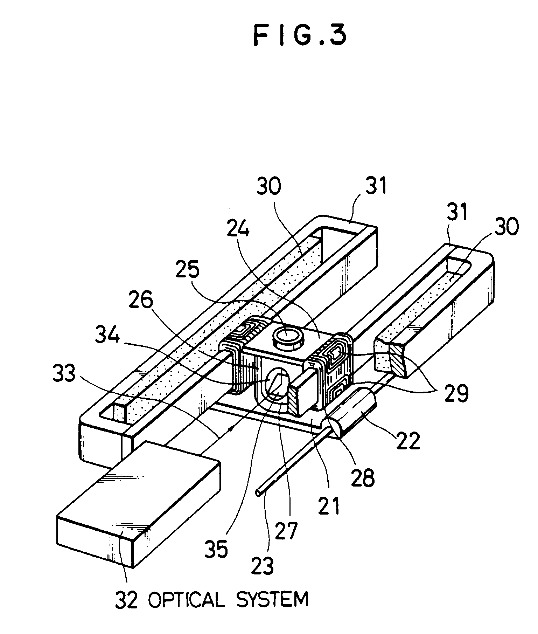

Fig. 3 shows another conventional optical head unit, in which the above-mentioned drawbacks are eliminated. In the same figure, reference numeral 21 denotes a carriage and a slide portion 22 formed at its end portion is guided by a shaft 23 so that it may move radially with respect to the disc. Reference numeral 24 denotes an armature, on which an objective lens 25 is attached. Reference numeral 27 denotes a slide shaft fixed to the carriage 21 and is inserted through a slide portion 26 fixed to the armature 24. Reference numeral 28 denotes a coil for tracking and (radial) servo control of the carriage, and reference numeral 29 denotes a focusing coil stuck onto the coil 28. Reference numeral 30 denotes a permanent magnet and reference numeral 31 denotes a yoke, a closed magnetic circuit being formed by them. The yoke 31 is inserted through the coil 28. Reference numeral 32 denotes an optical system which emits a laser beam 33, and 34 a light transparent portion formed at the slide portion 26 and the slide shaft 27. Reference numeral 35 denotes a mirror system, which is fixed onto the carriage 21 within the slide shaft 27.

The laser beam 33 emitted from the optical system 32 passes through the transparent portion 34 and is reflected by the mirror 35 so that it irradiates the disc via the objective lens 25. Light reflected by the disc follows the opposite path to be incident on the optical system 32. In the same way as the case described above, when the focus error signal is supplied to the coil 29, since the coil 29 is disposed within the magnetic field between the magnets 30 and the yokes 31, electromagnetic force is generated with the result that the armature 24 and hence the objective lens 25, is moved in the vertical (focusing) direction. At this time, the slide portion 26 is guided by the slide shaft 27 so that the armature 24 smoothly moves in the vertical direction. Since the height of the coil 28 is selected to be greater than that of the yoke 31, there is no chance that the upper and lower end portions of the coil 28 contact those of the yoke 31.

Also the tracking error signal and the carriage error signal are supplied to the coil 28. Since the coil 28 is disposed within the same magnetic field as the coil 29, electromagnetic force is generated so that the armature 24 (together with the objective lens 25 and carriage 21) moves in the tracking direction and in the radial direction of the disc.

Since the optical system 32 in the apparatus of Figure 3 is not loaded on the carriage 21 the entire carriage 21 can be made to weigh about 10 g. As a result, the average access time can be shortened to about 70 ms. A similar optical head is disclosed in EP-A-0212697.

However, in the apparatus of Figure 3, since the carriage 21 is moved not only in the case of carriage control, which is a rough access, but also in the case of tracking control, which is a fine access on the order of microns, the load imposed upon the tracking servo control is made greater than in the apparatus of Figure 2, and , further, the friction caused on the slide portion 22 causes a hysteresis phenomenon to its movement. Moreover, the mass distribution of the carriage 21 can cause an imbalance in the driving force of the coil 28, and the frequency characteristic changes depending on the amount of its movement. Consequently, with specific reference to the frequency characteristic, gain can suddenly be changed or the phase can be disturbed in the high range of bandwidth, thus causing a difficulty in achieving a precise tracking servo action.

With a view to overcoming these drawbacks, the present invention provides optical head apparatus for an optical disc, comprising: an objective lens for illuminating light for recording or reproducing information onto or from a disc; a carriage movable in a radial direction of said disc; an armature supporting said objective lens; support means supporting said armature on the carriage slidably in a focussing direction (F) and rotatably in a tracking direction (Tr), and; an optical system which generates light supplied to said objective lens; wherein said optical system is disposed at a predetermined position such that in use said carriage moves relative thereto; and said apparatus further comprising a drive means including a first part thereof disposed so that it does not operatively move together with the carriage, and a second part drivingly coupled with the first part and operative to drive the carriage in said radial direction of the disc and also to turn the armature in the tracking direction.

Thus, armature is arranged on the carriage so that it may slide in the focusing direction and may rotate in the tracking direction. The optical system is not loaded on the carriage but is fixed at a predetermined position.

Consequently, the weight of the movable portion which moves during the tracking control and the movable portion which moves during the carriage control can respectively be made smaller to achieve a fast access and a precise tracking servo action.

In order that the invention may be more fully understood an embodiment thereof will now be described, reference being made to the accompanying drawings wherein:
Figure 1 is a perspective view of an optical head apparatus according to the present invention;
Figure 2 is a perspective view of a first example of conventional optical head apparatus;
Figure 3 is a perspective view of a second example of conventional optical head apparatus;
Figure 4 is a cross-sectional view of a coil for apparatus according to the present invention;
Figure 5 is a plan view of an optical system for apparatus according to the present invention;
Figure 6 is a block diagram of a driving circuit for apparatus according to the present invention;
Figure 7 is an explanatory view of a focusing coil for apparatus according to the present invention;
Figure 8 is an explanatory view of a carriage and tracking coil; and
Figure 9 is an explanatory view of the carriage and the tracking servo action.

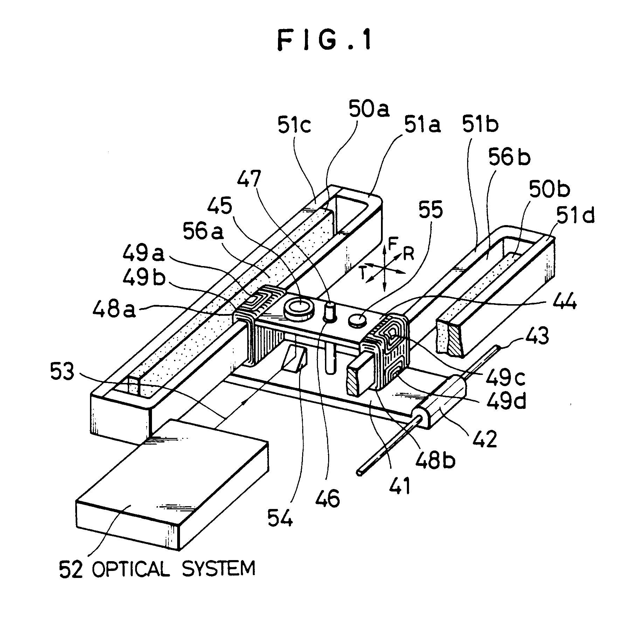

Figure 1 illustrates an arrangement of the optical head apparatus according to the invention. Slide portions 42, 42 are formed at its right and left end portions of a carriage 41. (In the figure, for the sake of convenience, only one of them is illustrated.) A shaft 43 is inserted through each of the slide portions 42 so that it may guide the movement of the carriage 41. A bearing 46 is formed in substantially the middle of an armature 44. A post 47 fixed upright on the carriage 41 is inserted through the bearing 46 so that, guided by the post 47, the armature 44 may slide in the focusing direction (indicated by arrow F) while it may rotate in the tracking direction (indicated by arrow T) with the post 47 as its axis. An objective lens 45 is fixed on the armature 44, being spaced apart (being shifted) from the post 47 by a predetermined distance. A counterbalance 55 having substantially the same weight as the objective lens 45 is attached onto the armature 44, and is spaced apart from the post 47 by the same distance and on the opposite side of the objective lens 45 with respect to the post 47. As a result, the weight can be balanced when the armature 44 is rotated. Tracking and carriage-servo coils 48a and 48b are fixed to the left and right of the armature 44. The coils 48a and 48b are wound in the form of a hollow and square column and yokes 51a and 51b are each inserted through their hollow portion. Coils 49a to 49d are flat and substantially rectangular focus servo coils, and are wound in spiral form and are each stuck to the upper and lower corners outside of the coils 48a and 48b.

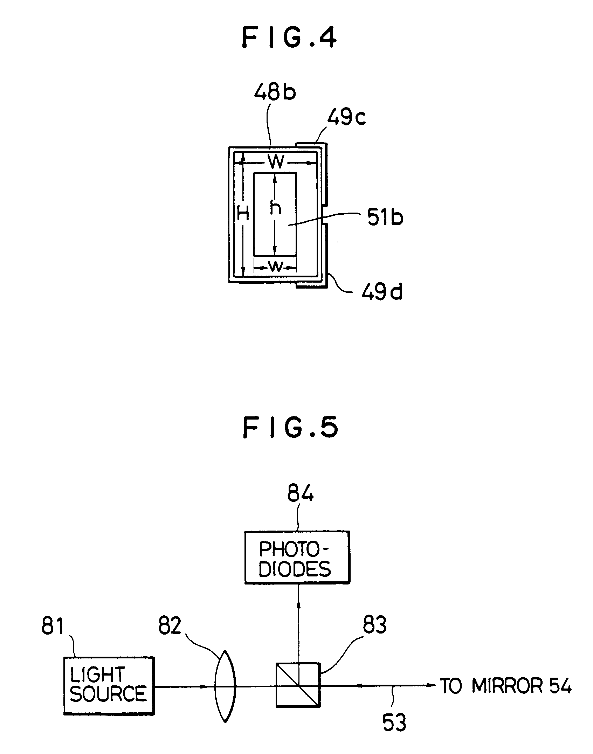

As shown in Fig. 4, the height H of the hollow portion of the coil 48b (48a) is set to be greater than the height h of the yoke 51b (51a). Besides, the width W of the hollow portion of the coil 48b is set to be sufficiently greater than that w of the yoke 51b.

In Fig. 1, planar permanent magnets 50a and 50b are magnetized in the direction of their width. The magnets 50a and 50b are each fixed to the yokes 51c and 51d. Since the yokes 51a and 51c, and 51b and 51d are connected at their end portions, the magnetic fluxes emanating from the magnets 50 and 50b and entering into their gaps 56a and 56b are entered into the yokes 51a and 51d and are returned via the yokes 51c and 51d to the magnets 50a and 50b to form a closed magnetic circuit.

An optical system 52 incorporates, as shown in Fig. 5, a light source 81 comprised of a semiconductor laser or the like, a collimator lens 82 for converting the diverging light emitted from the light source 81 into a parallel light beam, a beam splitter 83 for separating the light incident onto the disc and the light reflected from the disc, photodiodes 84 for receiving the reflected light and the like.

A mirror 54 is attached onto the carriage 41, reflects the laser beam 53 emitted from the optical system 52 toward the objective lens 45, and reflects the light returning therefrom toward the optical system 52.

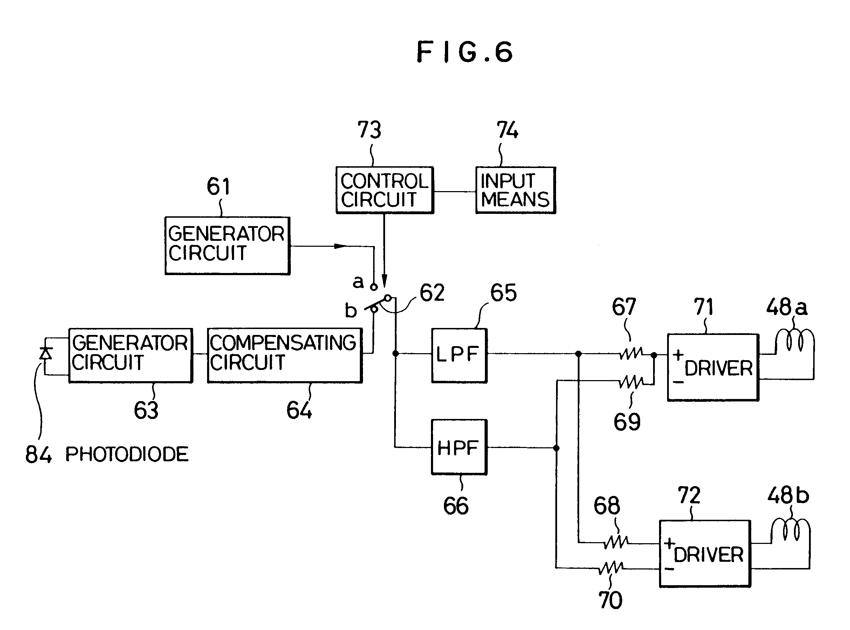

Fig. 6 is a block diagram of a drive circuit for driving the optical head apparatus illustrated in Fig. 1. A generator circuit 61 for generating a driving signal for driving the carriage 41, includes, for example, a counter or the like for counting the number of the tracks. A generator circuit 63 generates a tracking error signal from the outputs of the photodiodes 84. A compensating circuit 64 compensates the tracking error signal output by the generator circuit 63 to have a predetermined frequency characteristic. A switch 62 alternatively selects the output of the generator circuit 61 and that of the compensating circuit 64. A low pass filter 65 and a high pass filter 66 respectively separate the low pass and high pass components from the outputs of the switch 62.

The output of the low pass filter 65 is supplied via resistors 67 and 68 to the non-inverted input terminals of the drivers 71 and 72. On the other hand, the output of the high pass filter 66 is input via a resistor 69 to the non-inverted input terminal of the driver 71 while being input via a resistor 70 to the inverted input terminal of the driver 72. That is, the output of the low pass filter 65 and that of the high pass filter 66 are respectively supplied to the drivers 71 and 72 in-phase and in opposite phase by means of the resistors 67 to 70.

The drivers 71 and 72 respectively drive the coils 48a and 48b wound in-phase. An input means 74 comprises, for example, a switch, key or the like and is operated when a predetermined instruction is input to a control circuit 73 which comprises a microcomputer or the like.

The laser beam 53 emitted from the light source 81 is transformed from the diverging light into the parallel light by the collimator lens 82. This parallel light passes through the beam splitter 83 to be directed to a mirror 54, which in turn reflects the laser beam 53 incident thereto in the direction substantially parallel to the disc, into the direction substantially perpendicular to the disc to direct it into the objective lens 45, which converges the incident parallel light onto the disc for irradiation. Since the light beam from the collimator lens 82 up to the objective lens 45 is a parallel beam, even if the length of the optical path from the light source 81 up to the objective lens 45 is changed according to the position of the carriage 41, the laser beam can be converged on the disc without being affected by the change in path length.

The laser beam reflected by the disc is directed to the beam splitter 83 via the objective lens 45 and the mirror 54. The beam splitter 83 reflects this returned light to be directed to the photodiodes 84.

If the intensity of the laser beam emitted from the light source 81 is made relatively large and is modulated in accordance with the signal, it is possible to change the optical property of the surface of the disc on which the signal is recorded. Furthermore, if the intensity is made constant and relatively weak to such an extent that the optical property of the signal recording surface is not changed, the returned light is modulated by the recorded signal, and a reproducing signal can be obtained from the outputs of the photodiodes 84.

In addition, if a means for applying astigmatism to the light source, such as a cylindrical lens is disposed along the light path and the photodiodes 84 are divided into four parts (so-called astigmatic method), then a focus error signal can be generated.

Furthermore, the generator circuit 63 computes the difference between the outputs of the photodiodes 84 divided into two parts laterally with respect to the track and generates the tracking error signal by means of, for example a push-pull action.

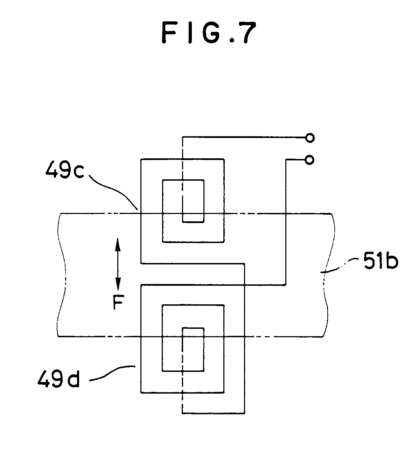

The focus error signal is supplied to the coils 49a to 49d. The coils 49c and 49d (also 49a and 49b), as shown in Fig. 7, for example, are connected in such a way that the currents flowing through portions extending in the radial direction of disc (portion extending in the left to right directions in the figure) are directed in the same direction over the range confronting the air gap (magnetic gap) 55b (56a) defined between the magnet 50b (50a) and the yoke 51b (51a). Consequently, if the in-phase focus error signals are supplied to the coils 49a and 49b through 49c and 49d, an electromagnetic force is generated with the result that, guided by the post 47, the armature 44 is driven in the focusing direction F.

Since the height H of each of the coils 48a and 48b is larger as compared with the height h of the yokes 51a and 51b, there is no chance that the coils 48a and 48b contact the yokes 51a and 51b at this time.

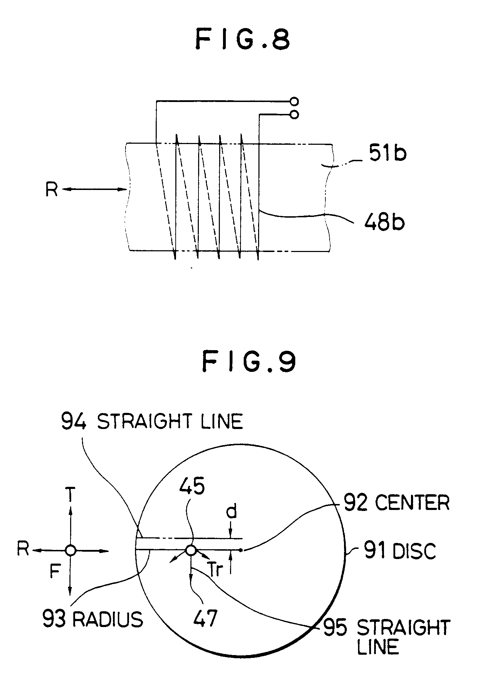

If input means 74 is operated to input an instruction to search for a predetermined track, then a control circuit 73 turns a switch 62 to the side of contact a. At this time, the generator circuit 61 generates and produces a carriage drive signal corresponding to the difference between the present track and the target track. Since this signal (usually a d.c. voltage of a predetermined level) has a relatively low frequency, most of it passes through the low pass filter 65. The signal which has passed through the low pass filter 65 is supplied to the non-inverted input terminals of the drivers 71 and 72 via resistors 67 and 68. Consequently, the in-phase current flows through coils 48a and 48b. As shown in Fig. 8, since the coils 48a and 48b are wound vertically with respect to the longitudinal direction of the yokes 51a and 51b, the electromagnetic force is generated in the radial direction of the disc. Consequently, guided by the post 43, the carriage 41 is moved in the radial direction of the disc. At this time, as shown in Fig. 9, the center of the optical axis of the objective lens 45 is moved in the radial direction R of the disc on a predetermined radius 93, passing through the center 92 of the disc 91, or on a straight line 94 spaced apart by a relatively small predetermined distance d from the radius 93.

When the present track coincides with the target track or approaches it, the control circuit 73 turns the switch 62 to the side of the contact b. As a result, after the tracking error signal output by the generator circuit 63 is compensated to a predetermined frequency characteristic by the compensating circuit 64, it is input into the low pass filter 65 and the high pass filter 66 via the switch 62.

The high frequency component of the tracking error signal passes through the high pass filter 66. This signal is input into the non-inverted input terminal of the driver 71 via the resistor 69 while being input into the inverted input terminal of the driver 72 via the resistor 70. Consequently, the coils 48a and 48b are driven in opposite phase by the drivers 71 and 72. That is, in Fig. 1, when the coil 48 generates, for example, the driving force in the rightward (leftward) direction, the coil 48b generates the driving force in the leftward (rightward) direction. As a result, the armature 44 is rotated in the clockwise or counterclockwise direction with the post as fulcrum. As shown in Fig. 9, since a straight line 95 connecting the post 47 with the center of the objective lens 45 at the reference position is made to run substantially vertical to the radius 93 (substantially parallel to the direction T of the track), the objective lens 45 is rotated in the tracking direction Tr. This direction runs substantially parallel to the radial direction R of the disc in the range in which the rotation angle does not become so large.

At this time, since the width W of the coil 48a and 48b is set sufficiently larger than the width w of the yokes 51a and 51b, the coils 48a and 48b do not contact the yokes 51a and 51b.

On the other hand, the low band component of the tracking error signal is separated (by integration) by the low pass filter 65 and is supplied as the carriage error signal to the drivers 71 and 72 in-phase via the resistors 67 and 68. Consequently, as in the above-described case, the carriage 41 is driven in the direction of radius R by the coils 48a and 48b. As a result, the light spot on the disc continuously keeps tracing the track from the inner circumference toward the outer circumference or in the opposite direction.

Since the mass of the movable portions including the carriage 41 which move in the radial direction of the disc can be made to weigh about 10 g, it is possible to achieve a frequency characteristic which is flat up to about 1 KHz. Besides, since the mass of the movable portions which move in the tracking direction can be made to weigh about 1 g, it is possible to achieve a frequency characteristic which is flat from 300 Hz to 6 KHz. Consequently, the cut-off frequency of the low pass filter 65 and the high pass filter 66 can be, for example, about 600 Hz.

Incidentally, when the coils 48a and 48b are wound in opposite phase (opposite direction), the tracking error signal and the carriage error signal may respectively be supplied in-phase and in opposite phase.

As described above, in the present invention, the armature provided with the objective lens is supported on the carriage so that it may slide in the focusing direction and may rotate in the tracking direction. In addition, the armature is driven by the in-phase carriage error signal and opposite phase tracking error signal. Consequently, it is possible to lighten the movable portions so that a prompt access and a precise tracking control can be achieved.

## Claims

1. Optical head apparatus for an optical disc, comprising:
an objective lens (45) for illuminating light for recording or reproducing information onto or from a disc (93);
a carriage (41) movable in a radial direction of said disc (93);
an armature (44) supporting said objective lens (45); support means (46, 47) supporting said armature (44) on the carriage (41) slidably in a focussing direction (F) and rotatably in a tracking direction (Tr), and;
an optical system (52) which generates light supplied to said objective lens (45);
**characterised in that** said optical system (52) is disposed at a predetermined position such that in use said carriage (41) moves relative thereto; and
said apparatus further comprising a drive means (48, 49, 50, 51) including a first part (50a, 50b, 51a - 51d) thereof disposed so that it does not operatively move together with the carriage, and a second part (48a, 48b, 49a - 49d) drivingly coupled with the first part and operative to drive the carriage in said radial direction of the disc and also to turn the armature in the tracking direction.

2. Optical head apparatus as set forth in claim 1, wherein a pair of said drive means (48a, 48b, 49a, 50a, 50b, 51a - 51d) are respectively driven corresponding to an in-phase carriage position error signal and an opposite phase tracking error signal.

3. Optical head apparatus as set forth in claim 1 or 2, wherein for the or each of said drive means the first part thereof comprises a magnetic circuit (50a, 50b, 51a - 51d) disposed so that it does not move together with said carriage, and the second part includes a coil (48a, 48b), which is mounted on said armature so that at least part of it may be disposed within the magnetic field generated by said magnetic circuit.

4. Optical head apparatus as set forth in claim 3 wherein said magnetic circuit comprises a permanent magnet (50a, 50b) and a yoke (51a, 51b), said yoke extending through the coil and in the radial direction of said disc, the height and width of said coil being formed greater than those of said yoke to permit movement of the coil (48a, 48b) in the focusing direction and rotation in the tracking direction relative to the yoke (51a, 51b).

5. Optical head apparatus as set forth in claim 4 wherein the second part includes a further coil (49a, - 49d) for cooperating with the magnetic field to move the armature in the focusing direction.

6. Optical head apparatus as set forth in claim 1 , wherein said objective lens (45) is positioned to be shifted with respect to the rotation center (47) of said support means.

7. Optical head apparatus as set forth in claim 6, wherein a weight (55) is attached to said armature opposite to said objective lens with respect to said rotation center so as to counterbalance said objective lens.

8. Optical head apparatus as set forth in claim 7, wherein said weight is disposed at the same distance from the rotation center as said objective lens.

9. Optical head apparatus as set forth in any preceding claim, wherein said support means comprises a bearing (46) formed on said armature, and a post (47) upstanding from said carriage and inserted through said bearing.

10. Optical head apparatus as set forth in any preceding claim wherein said optical system (52) comprises a light source (81) for emitting light, photodiodes (84) for receiving light reflected from said recording medium, and a beam splitter (83) for separating light which is reflected by said recording medium and travels towards said photodiodes, from light directed from said light source toward said recording medium.

11. Optical head apparatus as set forth in any preceding claim wherein said optical system includes a collimator lens (82) for transforming light directing toward said recording medium into parallel beam.

12. Optical head apparatus as set forth in claim 3 when appendant to claim 2 further comprising a pair of driver circuits (71, 72) for driving said coils of each of said pair of drive means so that the first coils of said pair of drive means are in phase with respect to the carriage position error signal and are in opposite phase with respect to the tracking error signal.

13. Optical head apparatus as set forth in claim 12 wherein the pair of coils (48a, 48b) are wound in phase, and a supply means (65-70), which supplies said carriage position error signal and the tracking error signal to the pair of driver circuits (71, 72), respectively supplies said carriage position error signal in-phase and said tracking error signal in opposite phase.

14. Optical head apparatus as set forth in claim 12, wherein said pair of first coils (48a, 48b) are wound in opposite phase, and a supply means (65-70), which supplies said carriage error signal and said tracking error signal to the pair of driver circuits, respectively supplies said carriage position error signal in opposite phase and said tracking error signal in-phase.

15. Optical head apparatus as set forth in any one of claims 12 to 14 wherein said tracking error signal is supplied to the pair of driver circuits (71, 72) via a high pass filter (66), and said carriage error signal is supplied to the pair of driver circuits via a low pass filter (65).

16. Optical head apparatus as set forth in claim 12, wherein at least one of said pair of driver circuits (71, 72) includes a differential amplifier.

## Patentansprüche

1. Anordnung für einen optischen Kopf für eine optische Scheibe, die folgendes umfasst:
eine Objektivlinse (45), um Licht zur Aufnahme oder Wiedergabe von Information auf oder von einer Scheibe (93) zu beleuchten;
einen Wagen (41), der in eine Radialrichtung von der Scheibe (93) bewegt werden kann;
einen Anker (44), der die Objektivlinse (45) unterstützt;
ein Unterstützungsmittel (46, 47), das den Anker (44) auf dem Wagen (41) gleitbar in einer Fokussierrichtung (F) und drehbar in einer Spureinstellungsrichtung (Tr) unterstützt, und;
ein optisches System (52), das Licht erzeugt, das der Objektivlinse (45) geliefert wird;
dadurch gekennzeichnet, dass das optische System (52) in einer vorbestimmten Stellung angeordnet ist, so dass der Wagen (41) sich während der Benutzung relativ dazu bewegt; und
wobei die Anordnung weiterhin ein Antriebsmittel (48, 49, 50, 51) umfasst, das einen ersten Teil (50a, 50b, 51a - 51d) einschliesst, der so angeordnet ist, das er sich betrieblich nicht gemeinsam mit dem Wagen bewegt, und einen zweiten Teil (48a, 48b, 49a -49d) der antreibend an den ersten Teil angeschlossen ist, und betrieben werden kann, um den Wagen in der Radialrichtung der Scheibe anzutreiben, und auch den Anker in der Spureinstellungsrichtung zu wenden.

2. Anordnung für einen optischen Kopf nach Anspruch 1, in der ein Antriebsmittelpaar (48a, 48b, 49a, 50a, 50b, 51a -51d) jeweils entsprechend mit einem gleichphasigen Wagenstellungsfehlersignal und einem gegenphasigen Spureinstellungsfehlersignal angetrieben wird.

3. Anordnung für einen optischen Kopf nach Anspruch 1 oder 2, in der der erste Teil des Antriebsmittels für die oder jedes der Antriebsmittel einen magnetischen Kreislauf (50a, 50b, 51a - 51d) umfasst, der so angeordnet ist, dass er sich nicht gemeinsam mit dem Wagen bewegt, und der zweite Teil eine Spule (48a, 48b) einschliesst, die auf dem Anker angebracht ist, so dass wenigstens ein Teil davon in dem magnetischen Feld, das von dem magnetischen Kreislauf erzeugt wird, angeordnet sein kann.

4. Anordnung für einen optischen Kopf nach Anspruch 3, in der der magnetische Kreislauf einen Permanentmagneten (50a, 50b) und ein Joch (51a, 51b) umfasst, wobei sich das Joch durch die Spule und in der Radialrichtung der Scheibe erstreckt, wobei die Höhe und Breite der Spule grösser als die des Jochs ist, um Bewegung der Spule (48a, 48b) in der Fokussierrichtung und Drehung in der Spureinstellungsrichtung relativ zum Joch (51a, 51b) zu gestatten.

5. Anordnung für einen optischen Kopf nach Anspruch 4, in der der zweite Teil eine weitere Spule (49a - 49d) einschliesst, um mit dem Magnetfeld zusammenzuwirken, um den Anker in die Fokussierrichtung zu bewegen.

6. Anordnung für einen optischen Kopf nach Anspruch 1, in der die Objektivlinse (45) angeordnet ist, um in Bezug auf das Drehzentrum (47) des Unterstützungsmittels verschoben zu werden.

7. Anordnung für einen optischen Kopf nach Anspruch 6, in der ein Gewicht (55) an dem Anker gegenüber der Objektivlinse mit Bezug auf das Drehzentrum befestigt ist, um die Objektivlinse auszugleichen.

8. Anordnung für einen optischen Kopf nach Anspruch 7, in der das Gewicht die gleiche Entfernung von dem Drehzentrum wie die Objektivlinse hat.

9. Anordnung für einen optischen Kopf nach einem der vorhergehenden Ansprüche, in der das Unterstützungsmittel ein auf dem Anker gebildetes Lager (46) umfasst, und einen Pfeiler (47), der von dem Wagen erhoben ist und durch das Lager eingeschoben ist.

10. Anordnung für einen optischen Kopf nach einem der vorhergehenden Ansprüche, in der das optische System (52) eine Lichtquelle (81) zur Abgabe von Licht umfasst, Photodioden (84), um Licht, das von dem Aufnahmemedium reflektiert wird, zu empfangen, und einen Strahlteiler (83), um Licht, das von dem Aufnahmemedium reflektiert wird, und auf die Photodioden geht, von dem Licht, das von der Lichtquelle auf das Aufnahmemedium gerichtet wird, zu trennen.

11. Anordnung für einen optischen Kopf nach einem der vorhergehenden Ansprüche, in der das optische System eine Kollimatorlinse (82) einschliesst, um Licht, das auf das Aufnahmemedium gerichtet ist, in einen Parallelstrahl umzuformen.

12. Anordnung für einen optischen Kopf nach Anspruch 3, wenn er mit Anspruch 2 verbunden ist, die weiterhin ein Abntriebskreislaufpaar (71, 72) umfasst, um die Spulen von jedem des Antriebskreislaufpaars anzutreiben, so dass die ersten Spulen des Antriebskreislaufpaars in Bezug auf das Wagenstellungsfehlersignal gleichphasig und in Bezug auf das Spureinstellungsfehlersignal gegenphasig sind.

13. Anordnung für einen optischen Kopf nach Anspruch 12, in der das Spulenpaar (48a, 48b) gleichphasig gewickelt ist, und ein Lieferungsmittel (65-70), das das Wagenstellungsfehlersignal und das Spureinstellungsfehlersignal an das Antriebskreislaufpaar (71, 72) liefert, jeweils das Wagenstellungsfehlersignal gleichphasig und das Spureinstellungsfehlersignal gegenphasig.

14. Anordnung für einen optischen Kopf nach Anspruch 12, in der das erste Spulenpaar (48a, 48b) gegenphasig gewickelt ist, und ein Lieferungsmittel (65-70), das das Wagenfehlersignal und das Spureinstellungsfehlersignal an das Antriebskreislaufpaar liefert, jeweils das Wagenstellungsfehlersignal gegenphasig und das Spureinstellungsfehlersignal gleichphasig.

15. Anordnung für einen optischen Kopf nach einem der Ansprüche 12 bis 14, in der das Spureinstellungsfehlersignal mittels eines Hochpassfilters (66) an das Antriebskreislaufpaar (71, 72) geliefert wird, und das Wagenfehlersignal mittels eines Tiefpassfilters (65) an das Antriebskreislaufpaar geliefert wird.

16. Anordnung für einen optischen Kopf nach Anspruch 12, in der wenigstens ein Antriebskreislaufpaar (71, 72) einen Differentialverstärker einschliesst.

## Revendications

1. Appareil à tête optique pour disque optique, comportant:
une lentille d'objectif (45) pour la lumière d'éclairage pour enregistrer ou reproduire des renseignements sur ou à partir d'un disque (93); un chariot (41) se déplaçant dans le sens radial dudit disque (93);
un bâti de support(44) de ladite lentille d'objectif (45);
des moyens de support (46,47) assurant le soutien coulissant sur le chariot (41) dudit bâti (44) dans le sens de la focalisation (F) et en rotation dans le sens de la poursuite (Tr). et;
un système optique (52) assurant la génération de la lumière apportée à ladite lentille d'objectif (45);
caractérisé en ce que ledit système optique (52) est situé en position prédéterminée telle qu'en service ledit bâti (41) se déplace relativement; et ledit appareil prévoit en outre des moyens de commande (48,49, 50,51) en comportant un premier groupe (50a,50b,51a,51d) disposé de façon telle à ne pas se déplacer avec le chariot en mouvement, et un deuxième groupe (48a,48b,49a - 49d) accouplé en commande avec le premier groupe et fonctionnent de manière à commander le chariot dans ledit sens radial du disque ainsi que de tourner le bâti dans le sens de la poursuite.

2. Appareil à tête optique tel qu'indiqué à la revendication 1, dont une paire desdits moyens de commande (48a,48b,49a,50a,50b,51a-51d) est commandée respectivement par rapport à un signal en phase d'erreur de position de chariot et un signal en phase opposée d'erreur de poursuite.

3. Appareil à tête optique tel qu'indiqué aux revendications 1 ou 2, dont pour les moyens de commande ou chacun le premier groupe comporte un circuit magnétique (50a,50b,51a-51d) disposé de telle façon à ne pas déplacer ensemble avec ledit chariot, et le deuxième groupe comporte une bobine (48a, 48b) montée sur ledit bâti de façon telle qu'une partie au minimum est apte à se situer dans le champ magnétique généré par ledit circuit magnétique.

4. Appareil à tête optique tel qu'indiqué à la revendication 3 dont ledit circuit magnétique prévoit un aimant permanent (50a,50b) et un bloc de bobinage (51a, 51b), ledit bloc étant allongé au travers de la bobine et dans le sens radial dudit disque, la hauteur et la largeur de ladite bobine étant prévue supérieure aux cotes dudit bloc pour permettre le mouvement de la bobine (48a,48b) dans le sens focal et la rotation dans le sens de la poursuite par rapport à la bobine (51a, 51b).

5. Appareil à tête optique tel qu'indiqué à la revendication 4 dont le deuxième groupe prévoit une autre bobine (49a-49d) assurant le mouvement en collaboration avec le circuit magnétique pour déplacer le bâti dans le sens focal.

6. Appareil à tête optique tel qu'indiqué à la revendication 1, dont ladite lentille d'objectif (45) est située pour le déplacement par rapport au centre de rotation (47) desdits moyens de support.

7. Appareil à tête optique tel qu'indiqué à la revendication 6, dont le bâti prévoit un contrepoids (55) face à ladite lentille d'objectif par rapport audit centre de rotation, de telle façon à équilibrer ladite lentille d'objectif.

8. Appareil à tête optique tel qu'indiqué à la revendication 7, dont ledit contrepoids est situé à la même distance du centre de rotation que ladite lentille d'objectif.

9. Appareil à tête optique tel qu'indiqué à l'une ou l'autre des revendications précédentes, dont lesdits moyens de support prévoient un roulement (46) formé sur ledit bâti, et un montant (47) se dressant à partir dudit chariot et introduit dans ledit roulement.

10. Appareil à tête optique tel qu'indiqué à l'une ou l'autre des revendications précédentes, dont ledit système optique (52) comporte une source de lumière (81) émettant la lumière, des photodiodes (84) recevant la lumière reflétée depuis ledit moyen d'enregistrement, et un dispositif diviseur de faisceau (81) pour séparer la lumière reflétée par ledit moyen d'enregistrement vers les photodiodes, depuis la lumière dirigée de la source de lumière vers ledit moyen d'enregistrement.

11. Appareil à tête optique tel qu'indiqué à l'une ou l'autre des revendications précédentes, dont ledit système optique prévoit une lentille de collimateur (82) pour transformer la lumière dirigée vers le moyen d'enregistrement dans le faisceau parallèle.

12. Appareil à tête optique tel qu'indiqué à la revendication 3 en association avec la revendication 2 comportant en outre une paire de circuits de commande (71,72) pour commander lesdites bobines de chacune de ladite paire de moyens de commande de façon telle que les premières bobines de chaque paire des moyens de commande sont en phase par rapport au signal d'erreur de position de chariot et sont en phase opposée par rapport au signal d'erreur de poursuite.

13. Appareil à tête optique tel qu'indiqué à la revendication 12 dont ladite paire de bobines (48a,48b) sont enroulés en phase, et un moyen d'apport de courant (65-70), assurant ledit signal d'erreur de position de chariot et ledit signal d'erreur de poursuite à la paire de circuits de commande (71,72), et qui amène respectivement en phase ledit signal d'erreur de position de chariot 23 et en phase opposée ledit signal d'erreur de poursuite.

14. Appareil à tête optique tel qu'indiqué à la revendication 12 dont ladite paire de premières bobines (48a,48b) est enroulée en phase opposée, et un moyen d'apport de courant (65-70), assurant l'apport audit signal d'erreur de chariot et audit signal d'erreur de poursuite à la paire de circuits de commande, apporte respectivement en phase opposée ledit signal d'erreur de position de chariot et en phase ledit signal d'erreur de poursuite.

15. Appareil à tête optique tel qu'indiqué en l'une ou l'autre des revendication 12 à 14 dont ledit signal d'erreur de poursuite est apporté à la paire de circuits de commande (71,72) par l'intermédiaire d'un filtre passe-haut (66), et ledit signal d'erreur de chariot est apporté à la paire de circuits de commande (71,72) par l'intermédiaire d'un filtre passe-bas (65).

16. Appareil à tête optique tel qu'indiqué à la revendication 12, dont au minimum un de ladite paire de circuits de commande (71,72) prévoit un amplificateur différentiel.
